(19) Europäisches Patentamt
European Patent Office
Office européen des brevets

(11) **EP 0 806 886 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.7: **H05B 1/02**, H05B 3/74, G05D 23/24

(21) Anmeldenummer: **97103060.6**

(22) Anmeldetag: **26.02.1997**

(54) **Verfahren und Vorrichtung zum Messen der Temperatur an einer Kochstelle mit einem Leiterbahntemperatursensor**

Method and device for measuring the temperature on a hot plate with a track thermo sensor

Procédé et dispositif pour la thermométrie à un réchaud avec un capteur à piste conductive de température

(84) Benannte Vertragsstaaten:
**CH DE FR GB IT LI**

(30) Priorität: **11.05.1996 DE 19619141**
**05.11.1996 DE 19645485**

(43) Veröffentlichungstag der Anmeldung:
**12.11.1997 Patentblatt 1997/46**

(73) Patentinhaber: **AEG Hausgeräte GmbH**
**90429 Nürnberg (DE)**

(72) Erfinder: **Luther, Jürgen, Dipl.-Ing.**
**64289 Darmstadt (DE)**

(56) Entgegenhaltungen:
**EP-A- 0 467 133        DE-A- 4 336 752**
**GB-A- 2 060 329**

**Beschreibung**

Die Erfindung betrifft eine Vorrichtung zum Messen der Temperatur an einer Kochstelle mit einem Leiterbahntemperatursensor.

Aus der DE 4336752 A1 ist ein Glaskeramikkochfeld mit als Leiterbahnen ausgeführten Temperatur- und Kapazitätssensoren bekannt. Der Leiterbahntemperatursensor besteht aus einem Material mit temperaturabhängigem Widerstand. Seine Temperatur kann dadurch gemessen werden, daß durch die Leiterbahn ein konstanter Strom geschickt wird und der Spannungsabfall in einem Meßabschnitt der Leiterbahn dadurch gemessen wird, daß der Meßabschnitt mit zusätzlichen Meßleitungen kontaktiert wird, die nur zur Spannungsmessung dienen. Mit solchen Leiterbahntemperatursensoren können Temperaturen zwischen 20° C und 700° C gemessen werden. Durch alterungsbedingte Prozesse nimmt der Widerstand des Leiterbahnsensors erfahrungsgemäß über die Lebensdauer von etwa 2000 Betriebsstunden langsam zu, wobei sich sowohl der Absolutwert (Grundwiderstand, Offset) als auch die Temperaturempfindlichkeit des Widerstandes ändern. Dies hat zur Folge, daß nach mehreren Betriebsstunden Fehlmessungen auftreten, die zu unbefriedigenden Kochergebnissen führen.

Aus der DE 4336752 A1 ist weiter bekannt, durch Messung des Glaskeramikwiderstandes zwischen dem Leiterbahntemperatursensor und einer weiteren Leiterbahn die Temperatur der Glaskeramik zu bestimmen. Dabei wird systembedingt die höchste Temperatur zwischen den beiden Leitern erfaßt. Der Zusammenhang zwischen Glaskeramiktemperatur und Glaskeramikwiderstand weist über lange Betriebszeiten eine große Reproduzierbarkeit auf. Die Messung ist jedoch nur in einem Temperaturbereich zwischen ca. 250° C und 700° C einsetzbar.

Der Erfindung liegt die Aufgabe zugrunde, eine Vorrichtung zum Messen der Temperatur an einer Kochstelle mit einem Leiterbahntemperatursensor anzugeben, die eine zuverlässige Bestimmung der Temperatur der Kochstelle über deren gesamte Betriebsdauer ermöglichen. Insbesondere sollen alterungsbedingte Widerstandsänderungen (Kennlinienänderungen) des Leiterbahntemperatursensors kompensiert werden.

Die Erfindungsaufgabe wird mit den Merkmalen des Anspruchs 1 gelöst.

Die lineare Kennlinie des Leiterbahntemperatursensors wird durch zwei Kalibriermessungen neu kalibriert, bei denen bei jeweils einer Bezugstemperatur der zugehörige elektrische Widerstand des Leiterbahntemperatursensors als jeweiliger Bezugswiderstand gemessen wird und anschließend aus den beiden Bezugstemperaturen und den beiden Bezugswiderständen die beiden Parameter für die lineare Abhängigkeit der Temperatur von dem Widerstand des Leiterbahntemperatursensors (lineare Kennlinie) bestimmt werden (lineare Interpolation oder Extrapolation). Mit der derart neu bestimmten Funktionalität (Kennlinie) kann nach Abschluß des Kalibriervorgangs die Temperatur an der Kochstelle während eines Kochvorgangs oder anderen Garvorgangs genau gemessen werden. Zur Ausführung der Kalibrations- und Messaufgaben umfaßt die Vorrichtung eine entsprechende ausgebildete Meß- und Steuereinrichtung. Die Kalibrierung kann automatisch vor oder bei jedem Garvorgang erfolgen, so dass die Temperatur des Leiterbahntemperatursensors jeweils präzise ermittelt wird und eine genaue Regelung des jeweiligen Garvorgangs möglich ist. Insbesondere werden durch die Kalibrierung auch fertigungsbedingte Streuungen zwischen verschiedenen Leiterbahnsektoren sowie zwischen unterschiedlichen Messelektroniken kompensiert.

Vorteilhafte Weiterbildungen ergeben sich aus den vom Anspruch 1 abhängigen Ansprüchen. Diese abhängigen Ansprüche betreffen vorteilhafte Ausführungsformen zum Messen der Bezugstemperaturen $T_1$ und $T_2$ für die Kalibrierung der Kennlinie des Leiterbahntemperatursensors.

Bei der Ausführung der Vorrichtung gemäß Anspruch 6 ist zur Messung der zweiten Bezugstemperatur an einer Glaskeramikkochstelle eine Widerstandsmessung der Glaskeramik vorgesehen. Dies hat den Vorteil, daß eine solche Widerstandsmessung der Glaskeramik im allgemeinen ohnehin zur Temperaturmessung, insbesondere für höhere Temperaturen, vorhanden ist und daher kein zusätzlicher Temperatursensor erforderlich ist.

Mit den Merkmalen der Ansprüche 4 und 5 wird sichergestellt, dass Aktualisierung von Bezugstemperaturen und Bezugswiderständen nur dann erfolgt, wenn sich der Leiterbahntemperatursensor ausreichend genau auf der jeweiligen Bezugstemperatur befindet.

Die Erfindung wird im folgenden anhang schematischer Zeichnungen beispielsweise und mit weiteren Einzelheiten erläutert.

Es stellen dar:

Fig. 1    ein Blockschaltbild einer Vorrichtung zum Messen der Temperatur an einer Kochstelle und

Fig. 2    ein Flußdiagramm einer Aktualisierung der Bezugswerte.

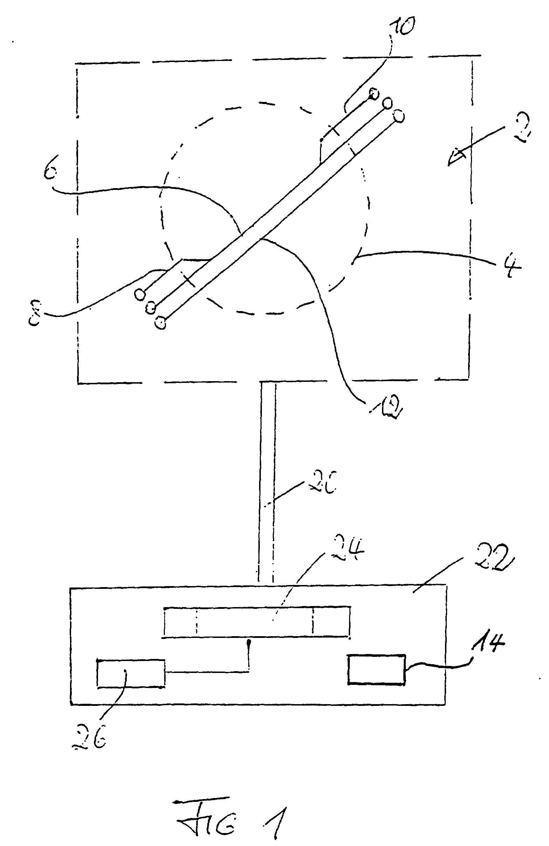

Gemäß Fig. 1 weist ein Glaskeramikkochfeld 2 eine Kochstelle 4 auf, der eine nicht dargestellte Heizeinrichtung zugeordnet ist. Vorteilhafterweise an der Unterseite des Glaskeramikmaterials befinden sich im Bereich der Kochstelle 4 eine Leiterbahn 6, die sich diagonal über die Kochstelle 4 erstreckt und aus einem Material mit deutlich temperaturabhängigem Widerstand besteht, zwei Meßleiterbahnen 8 und 10, die die Leiterbahn 6 nahe dem Umfang der Kochstelle 4 kontaktieren, sowie eine weitere Leiterbahn 12, die im Abstand zur Leiterbahn 6 im wesentlichen parallel zu dieser verläuft.

Die Leiterbahn 6 bildet zusammen mit den Meßleiterbahnen 8 und 10 einen Leiterbahntemperatursensor, dessen Temperatur aus dem Widerstand der Leiterbahn 6 zwischen den Meßleiterbahnen 8 und 10 hergeleitet wird. Zur genauen Messung des Widerstandes wird im allgemeinen durch die Leiterbahn 6 ein vorgegebener konstanter Strom geschickt, und es wird der Spannungsabfall über der Leiterbahn 6 zwischen den Kontaktpunkten zu den Meßleiterbahnen 8 und 10 gemessen. Mit dem Leiterbahntemperatursensor können im allgemeinen Temperaturen zwischen etwa 20°C und etwa 700°C gemessen werden.

Durch Messung des temperaturabhängigen Widerstandes des Glaskeramikmaterials zwischen den Leiterbahnen 6 und 12 läßt sich die Temperatur des Glaskeramikmaterials der Kochstelle 4 genau (hohe Reproduzierbarkeit) und langzeitstabil (praktisch keine Alterungsdrift) bestimmen. Eine solche Einrichtung zur Temperaturbestimmung des Glaskeramikmaterials durch Widerstandsmessung der Glaskeramik ist an sich bereits aus der DE 43 33 752 A1 bekannt und ist üblicherweise an Glaskeramikkochstellen vorhanden. Diese Einrichtung, die eine langzeitstabile Temperaturmessung des Glaskeramikmaterials ermöglicht, wird zur selbsttätig erfolgenden Eichung des Leiterbahntemperatursensors herangezogen.

Die beschriebenen Leiterbahnen 6, 8, 10 und 12 sind über Leitungen 20 mit einer Meß- und Steuereinrichtung 22 verbunden, die einen Mikroprozessor 24, einen programmierbaren Speicher 26, eine Anzeige- und Bedieneinheit (nicht dargestellt), eine Stromversorgung und ggf. weitere Komponenten enthält. Die Meß- und Steuereinrichtung 22 verwendet die an der Kochstelle 4 mit Hilfe des Leiterbahntemperatursensors 6, 8, 10 und des Glaskeramikwiderstandssensors 6, 12 gemessene Temperaturen zur Steuerung oder Regelung eines auf der Kochstelle 4 durchgeführten Garvorgangs. Über die Widerstandsmessung des Glaskeramikmaterials kann die Temperatur T der Kochstelle 4 im allgemeinen nur in einem Bereich über etwa 250° C bis im allgemeinen etwa 700°C genau ermittelt werden. Darunter liegende Temperaturen T der Kochstelle 4 werden über den Leiterbahntemperatursensor 6, 8 und 10 ermittelt.

Ein Problem liegt nun darin, daß sich sowohl der Absolutwiderstand der Leiterbahn 6 als auch deren Temperaturempfindlichkeit im Laufe der Betriebsdauer der Kochstelle 4 ändern.

Zur Kompensation dieser unerwünschten alterungsbedingten Widerstandsänderungen der Leiterbahn 6 führt die Meßeinrichtung 22 mit Hilfe eines zusätzlichen Temperatursensors 14 eine Kablibrierung des Leiterbahntemperatursensors 6, 8, 10 durch Korrektur von dessen Kennlinie durch.

Der Temperatursensor 14 ist vorzugsweise ein Halbleitersensor oder Pt100-Sensor, dessen Temperatur in langzeitstabiler Weise in einem Meßbereich vorzugsweise zwischen etwa 5° C und etwa 100° C gemessen werden kann. Der Temperatursensor 14 ist vorzugsweise im kälteren Bereich der Meß- und Steuereinrichtung 22 angeordnet und ist thermisch mit dem Leiterbahntemperatursensor 6, 8, 10 gekoppelt, so daß die Temperaturen des Leiterbahntemperatursensors 6, 8, 10 und des Temperatursensors 14 in einer eindeutigen Weise korreliert sind.

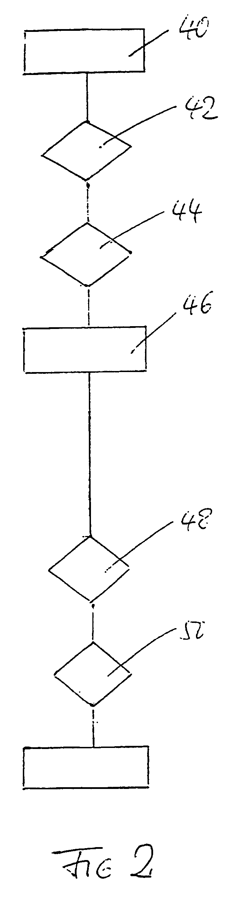

Gemäß Fig. 2 arbeitet die beschriebene Vorrichtung vorzugsweise wie folgt:

In einem ersten Schritt 42 wird nach dem Betätigen 40 eines nicht dargestellten Kochstellenschalters ermittelt, ob die mit dem Temperatursensor 14 gemessene Temperatur unter einer Schwellentemperatur im Meßbereich des Temperatursensors 14 liegt, beispielsweise unter 35°C. Es kann dann davon ausgegangen werden, daß die Kochstelle 4 ausreichend lange nicht betrieben worden ist und ein Temperaturausgleich zwischen der Leiterbahn 6 und dem Temperatursensor 14 stattgefunden hat.

Im nächsten Schritt 44 wird dann ermittelt, ob die zeitliche Änderung (Ableitung) der Temperatur des Temperatursensors 14 unter einem vorbestimmten Grenzwert, beispielsweise 0,01° C/sec. liegt, was darauf hindeutet, daß die Temperatur des Temperatursensors 14 mit der der Leiterbahn 6 übereinstimmt (der Temperatursensor 14 kann sich durchaus in einiger Entfernung von der Kochstelle 4 befinden).

Zur Bestimmung der zeitlichen Ableitung der Temperatur T wird der zeitliche Verlauf der Temperatur des Temperatursensors 14 verfolgt und ein numerisches Verfahren (z. B. Differenzenverfahren) zur Ableitung der Temperatur nach der Zeit vom Mikroprozessor 24 durchgeführt.

Bei Vorliegen der beiden Bedingungen 42 und 44 werden die Temperatur des Temperatursensors 14 und der gleichzeitig gemessene Widerstand der Leiterbahn 6 als erste Bezugstemperatur $T_1$ bzw. erster Bezugswiderstand $R_1$ im Speicher 26 abgespeichert.

Als zusätzliche Bedingung für die Bestimmung der Bezugswerte $T_1$ und $R_1$ kann noch überprüft werden, ob die zeitliche Änderung des Widerstands der Leiterbahn 6 unterhalb eines vorgegebenen Toleranzwertes liegt, beispielsweise unter etwa 1mΩ/s .

Die Kochstelle 4 wird erst nach der Aktualisierung der Bezugswerte $T_1$ und $R_1$ beheizt.

In einem Schritt 46 wird bei Beendigung eines Garvorgangs die der Kochstelle 4 zugeordnete Heizeinrichtung ausgeschaltet. In einem Schritt 48 wird anschließend ermittelt, ob die Temperatur des Glaskeramikmaterials zwischen den Leitern 6 und 12 über einem vorbestimmten Wert liegt, beispielsweise über 280° C. Dies ist Gewähr dafür, daß die Temperatur des Glaskeramikmaterials richtig gemessen wird.

In einem weiteren Schritt 50 wird dann ermittelt, ob die Abkühlgeschwindigkeit (Betrag der zeitlichen Ableitung der Temperatur) des Glaskeramikmaterials geringer ist als ein vorbestimmter Wert, beispielsweise 0,2° C/sec. Trifft dies zu, so ist dies ein sicheres Indiz dafür, daß die Temperatur des Glaskeramikmaterials zwischen den Leiterbahnen 6 und 12 mit der der Leiterbahn 6 übereinstimmt.

Bei Vorliegen beider Bedingungen 48 und 50 wird im Schritt 52 eine gemessene Temperatur des Keramikmaterials als zweite Bezugstemperatur $T_2$ dem gleichzeitig gemessenen Widerstand der Leiterbahn 6 als zweitem Bezugswiderstand $R_2$ zugeordnet und in dem Speicher 26 abgelegt.

Zusätzlich kann auch hier der zeitliche Widerstandsgradient des Leiterbahntemperatursensors 6, 8, 10 auf sein Unterschreiten eines Grenzwertes hin untersucht werden als weitere Bedingung für eine Aktualisierung des Bezugswerte $T_2$ und $R_2$.

Die Bezugswerte $T_1$ und $R_1$ sowie $T_2$ und $R_2$ werden nach Möglichkeit bei oder nach jedem Kochvorgang aktualisiert.

Die Temperaturabhängigkeit des Widerstandes der Leiterbahn 6 läßt sich in guter Näherung durch eine Gerade mit folgender Gleichung darstellen:

$$T = a + m \times R,$$

wobei

T Temperatur,
a der Offsetwert der Geraden und
m die Steigung der Geraden sind

und das Symbol x" eine reelle Multiplikation bedeutet.

Die beiden Geradenparameter a und m werden aus den gespeicherten Bezugswerten $T_1$ und $T_2$ sowie $R_1$ und $R_2$ gemäß den Beziehungen

$$a = T_1 - R_1 \times (T_2 - T_1)/(R_2 - R_1)$$

und

$$m = (T_2 - T_1) / (R_2 - R_1)$$

abgeleitet, wobei das Symbol "/" eine reelle Division bedeutet.

Das Einsetzen der Parameter a und m in die Geradengleichung ergibt folgende Beziehung zwischen der Temperatur T und dem aktuell gemessenen Widerstand R des Leiterbahntemperatursensors mit der Leiterbahn 6:

$$T = T_1 + (R - R_1) \times (T_2 - T_1) / (R_2 - R_1)$$

Durch die automatisch erfolgende Aktualisierung der Bezugstemperaturen $T_1$ und $T_2$ und der Bezugswiderstände $R_1$ und $R_2$ ist es somit möglich, aus dem jeweils gemessenen Widerstand R der Leiterbahn 6 präzise die zugehörige Temperatur T der Leiterbahn 6 an der Kochstelle 4 zu ermitteln und in Steuer- oder Regelungsvorgänge einzuführen, die von der Meß- und Steuereinrichtung 22 in an sich bekannter Weise ausgeführt werden.

Anstelle einer Glaskeramik kann als Material für die Kochstelle 4 und das Kochfeld 2 auch ein Glas oder eine Keramik, beispielsweise eine Siliciumnitrid- oder Siliciumcarbidkeramik, vorgesehen sein. Die Beheizung der Kochstelle 2 kann dann außer durch eine Strahlungsbeheizung auch durch eine elektrische Direktbeheizung mit Widerstandsstrukturen an der Keramik erfolgen.

**Patentansprüche**

1. Vorrichtung zum Messen der Temperatur an einer Kochstelle (4) mit

   a) einem der Kochstelle zugeordneten Leiterbahntemperatursensor (6, 8, 10) mit einem temperaturabhängigen elektrischen Widerstand, **gekennzeichnet durch**
   b) eine Messeinrichtung (22) dies

      b1) bei einer ersten Bezugstemperatur $T_1$ den elektrischen Widerstand des Leiterbahntemperatursensors (6, 8, 10) als ersten Bezugswiderstand $R_1$ mißt,
      b2) bei einer zweiten Bezugstemperatur $T_2$ den elektrischen Widerstand des Leiterbahntemperatursensors (6, 8, 10) als zweiten Bezugswiderstand $R_2$ mißt, sowie
      b3) die Temperatur T des Leiterbahntemperatursensors (6, 8, 10) **durch** Messen von dessen elektrischem Widerstand R und Bilden des Ausdrucks

      $$T = T_1 + (R - R_1) \times (T_2 - T_1) / (R_2 - R_1)$$

      bestimmt, wobei

   c) zusätzlich wenigstens ein mit der Messeinrichtung (22) verbundener und gegenüber dem Leiterbahntemperatursensor (6, 8, 10) alterungsstabilerer Temperatursensor (14) zum messen der ersten Bezugstemperatur $T_1$ und der zweiten Bezugstemperatur $T_2$ vorgesehen ist.

2. Vorrichtung nach Anspruch 2, bei der die Messeinrichtung (22) die erste Bezugstemperatur $T_1$ und den zugeordneten ersten Bezugswiderstand $R_1$ vor einem Garvorgang auf der Kochstelle (4) bestimmt.

3. Vorrichtung nach einem der Ansprüche 1 bis 2, bei der die Meßeinrichtung (22) wenigstens die zweite Bezugstemperatur $T_2$ und den zugehörigen zweiten Bezugswiderstand $R_2$ nach einem Garvorgang auf der Kochstelle (4) bestimant.

4. Vorrichtung nach einem der Ansprüche 1 bis 3, bei der die Messeinrichtung (22) als erste Bezugstemperatur $T_1$ und zweite Bezugstemperatur $T_2$ Temperaturen auswählt, die in jeweils einem vorgegebenen Temperaturbereich liegen und bei denen die zeitliche Ableitung der Temperatur des jeweils zugeordneten Temperatursensors (6, 8, 14) jeweils einen vorbestimmten Grenzwert unterschreitet.

5. Vorrichtung nach einem der Ansprüche 1 bis 4, bei der die Messeinrichtung (22) als Bezugstemperatur $T_1$ und $T_2$ nur solche Temperaturen auswählt, bei denen die zeitliche Ableitung des Widerstands des Leiterbahntemperatursensors (6) jeweils einen vorgegebenen Grenzwert unterschreitet.

6. Vorrichtung nach einem der Ansprüche 1 bis 5, bei der die Kochstelle (4) aus Glas, Keramik oder Glaskeramik besteht und bei der der Temperatursensor (12) zum Messen der zweiten Bezugstemperatur $T_2$ den elektrischen Widerstand wenigstens eines Teils des Glases, der Keramik oder der Glaskeramik als Maß für die zweite Bezugstemperatur $T_2$ mißt.

## Claims

1. Device for measuring the temperature at a hotplate (4), comprising

   a) a track thermo-sensor (6, 8, 10) allocated to the hotplate and comprising a temperature-dependent electrical resistance **characterised by**
   b) a measuring device (22), which

   b1) at a first reference temperature $T_1$ measures the electrical resistance of the track thermo-sensor (6, 8, 10) as a first reference resistance $R_1$,
   b2) at a second reference temperature $T_2$ measures the electrical resistance of the conductor track temperature sensor (6, 8, 10) as a second reference resistance $R_2$, and
   b3) the temperature T of the track thermo-sensor (6, 8, 10) determines, by measuring its electrical resistance R and the forming the expression

   $$T = T_1 + (R - R_1) \times (T_2 - T_1) / (R_2 - R_1)$$

   wherein
   c) in addition at least one temperature sensor (14) associated with the measuring device (22) and stable against ageing with respect to the track thermo-sensor (6, 8, 10) is provided to measure the first reference temperature $T_1$ and the second reference temperature $T_2$.

2. Device according to claim 1, wherein the measuring device (22) determines the first reference temperature $T_1$ and the associated first reference resistance $R_1$ before a cooking process on the hotplate (4).

3. Device according to one of claims 1 to 2, wherein the measuring device (22) determines at least the second reference temperature $T_2$ and the associated second reference resistance $R_2$ after a cooking process on the hotplate (4).

4. Device according to one of claims 1 to 3, wherein the measuring device (22) selects as a first reference temperature $T_1$ and second reference temperature $T_2$ temperatures which lie each in a respective specified temperature range and in which the temporal derivation of the temperature of the respectively associated thermo-sensor (6, 8, 14) falls short of a respective predetermined limit value.

5. Device according to one of claims 1 to 4, wherein the measuring device (22) selects as a reference temperature $T_1$ and $T_2$ only such temperatures at which the temporal derivation of the resistance of the track thermo-sensor (6) corresponds to a respective specified limit value.

6. Device according to one of claims 1 to 5, wherein the hotplate (4) consists of glass, ceramic or glass ceramic and wherein the temperature sensor (12) for measuring the second reference temperature $T_2$ measures the electrical resistance of at least part of the glass, ceramic or glass ceramic as a measure of the second reference temperature $T_2$.

## Revendications

1. Dispositif pour mesurer la température à un emplacement de cuisson (4) avec

   a) un capteur de température à piste conductive (6, 8, 10) associé à l'emplacement de cuisson avec une résistance électrique dépendant de la température, **caractérisé par**
   b) une installation de mesure (22) qui

   b1) lors d'une première température de référence $T_1$ mesure la résistance électrique du capteur de température à piste conductive (6, 8, 10) comme première résistance de référence $R_1$,

b2) lors d'une deuxième température de référence $T_2$ mesure la résistance électrique du capteur de température à piste conductive (6, 8, 10) comme deuxième résistance de référence $R_2$ et

b3) détermine la température T du capteur de température à piste conductive (6, 8, 10) par la mesure de sa résistance électrique R et par la formation de l'expression

$$T = T_1 + (R - R_1) \times (T_2 - T_1) / (R_2 - R_1)$$

où

c) est prévu additionnellement au moins un capteur de température (14) relié à l'installation de mesure (22) et plus stable, en ce qui concerne le vieillissement, par rapport au capteur de température à piste conductive (6, 8, 10), pour mesurer la première température de référence $T_1$ et la deuxième température de référence $T_2$.

2. Dispositif selon la revendication 1, où l'installation de mesure (22) détermine la première température de référence $T_1$ et la première résistance de référence $R_1$ associée à celle-ci avant une opération de cuisson sur l'emplacement de cuisson (4).

3. Dispositif selon l'une des revendications 1 à 2, où l'installation de mesure (22) détermine au moins la deuxième température de référence $T_2$ et la deuxième résistance de référence $R_2$ associée après une opération de cuisson sur l'emplacement de cuisson (4).

4. Dispositif selon l'une des revendications 1 à 3, où l'installation de mesure (22) sélectionne comme première température de référence $T_1$ et comme deuxième température de référence $T_2$ des températures qui se situent respectivement dans une plage de température prédéterminée, et dans lesquelles la dérivée temporaire de la température du capteur de température respectivement associé (6, 8, 14) passe respectivement sous une valeur limite prédéfinie.

5. Dispositif selon l'une des revendications 1 à 4, où l'installation de mesure (22) sélectionne comme température de référence $T_1$ et $T_2$ seulement des températures où la dérivée temporaire de la résistance du capteur de température à piste conductive (6) passe respectivement sous une valeur limite prédéfinie.

6. Dispositif selon l'une des revendications 1 à 5, où l'emplacement de cuisson (4) est réalisé en verre, céramique ou vitrocéramique, et où le capteur de température (12), pour mesurer la deuxième température de référence $T_2$, mesure la résistance électrique d'au moins une partie du verre, de la céramique ou de la vitrocéramique comme mesure pour la deuxième température de référence $T_2$.

FIG 1

FIG 2